# EUROPÄISCHE PATENTANMELDUNG

(11) **EP 4 730 624 A1**
(43) Veröffentlichungstag der Anmeldung: **22.04.2026**
(21) Anmeldenummer: 24206852.6
(22) Anmeldetag: 16.10.2024
(51) Int. Cl.: H02K 5/24, H02K 7/18

(54) **STATORKERN FÜR ELEKTRISCHE MASCHINE**

(71) Anmelder: Flender GmbH, 46395 Bocholt (DE)
(72) Erfinder: ECKER, Helmut, 46395 Bocholt (DE); GRUBER, Robert, 46395 Bocholt (DE)
(74) Vertreter: Michalski Hüttermann & Partner Patentanwälte mbB

(57) **Zusammenfassung**

Statorkern 10 für eine elektrische Maschine 84, insbesondere für einen Generator einer Windkraftanlage 100, umfassend eine Mehrzahl an Blechpaketen 12, die in ihrer Gesamtheit hohlzylindrisch um eine Längsachse A_{L} angeordnet sind und eine zylindrische Außenumfangsfläche 14 bilden, zumindest zwei Aufnahmeelemente 16, wobei die zumindest zwei Aufnahmeelemente 16 über eine Vergussmasse 20 gegenüber der Außenumfangsfläche 14 befestigt sind. Die Vergussmasse 20 wirkt als eine Art Stoßdämpfer zwischen Blechpaket 12 und Statorgehäuse 6. Es entfällt eine mechanische Bearbeitung der Aufnahmeelemente 16. Das Paket kann ohne Gehäuseerwärmung eingesetzt und zentriert werden.

## Beschreibung

Die Erfindung betrifft einen Statorkern für eine elektrische Maschine, insbesondere für einen Generator einer Windkraftanlage, umfassend eine Mehrzahl an Blechpaketen, die in ihrer Gesamtheit hohlzylindrisch um eine Längsachse A_{L} angeordnet sind und eine zylindrische Au-ßenumfangsfläche bilden und zumindest zwei Aufnahmeelemente.

Durch Kosten- und Bauraumoptimierung und steigende Leistungsanforderungen an Windkraftanlagen werden die Generatoren und ihre Komponenten immer kompakter. Dies führt dazu, dass bei gleichbleibender Baugröße und höherer Leistung die Ständergehäuse bzw. Statorgehäuse ein geringeres Gewicht haben, aber höheren Betriebslasten ausgesetzt sind. Dabei werden die vom Statorkern angeregten Schwingungen und Betriebslasten, welche durch magnetischen Zug verursacht werden, ins Gehäuse eingeleitet. Dadurch verstärkt sich wiederum das Schwingungsverhalten, so dass die Betriebsgeräusche der Generatoren zunehmen und die maximalen Werte der Kundenanforderungen übersteigen.

Außerdem werden Statorkern und Statorgehäuse herkömmlich derart bearbeitet, dass der Statorkern über eine Passung gegenüber dem Statorgehäuse zentriert einsitzt. Dazu wird das Statorgehäuse zum Einsetzten erhitzt. Nach dem Abkühlen werden Bohrungen für Passstifte gebohrt, die jeweiligen Passstifte gerieben und in die Bohrungen eingetrieben. Insgesamt entsteht ein hoher Aufwand für die mechanische Bearbeitung, für die Prüfung der Passungen sowie für die Konservierung des anschließenden Transports zum Ort der Endmontage.

Es besteht ein ständiges Bedürfnis einerseits das Schwingungsverhalten zu verbessern und andererseits den hohen Aufwand der mechanischen Bearbeitung zu reduzieren.

Es ist die Aufgabe der Erfindung Maßnahmen aufzuzeigen, die ein verbessertes Schwingungsverhalten und einen verringerten Bearbeitungsaufwand ermöglichen.

Die Lösung der Aufgabe erfolgt durch einen Statorkern für eine elektrische Maschine mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft einen Statorkern für eine elektrische Maschine, insbesondere für einen Generator einer Windkraftanlage, mit einer Mehrzahl an Blechpaketen, die in ihrer Gesamtheit hohlzylindrisch um eine Längsachse A_{L} angeordnet sind und eine zylindrische Außenumfangsfläche bilden, zumindest zwei Aufnahmeelementen, wobei die zumindest zwei Aufnahmeelemente über eine Vergussmasse gegenüber der Außenumfangsfläche befestigt sind.

Die vorgeschlagene elektrische Maschine weist somit von radial innen nach radial außen das hohlzylinderförmigen Statorpaket auf, dann die zumindest zwei Aufnahmeelement und schließlich ein Statorgehäuse auf. Dabei sind der Statorkern, das jeweilige Aufnahmeelement und das Statorgehäuse jeweils drehfest miteinander verbunden. Innerhalb des Statorkerns ist der drehbar gelagerte Rotorläufer der elektrischen Maschine angeordnet. Das jeweilige Aufnahmeelement kann die Außenumfangsfläche der Blechpakete im Wesentlichen vollständig, insbesondere vollständig, umgeben. Denkbar ist auch, dass das jeweilige Aufnahmeelement den Statorkern lediglich teilweise umschließt. Das Statorgehäuse kann wiederum das jeweilige Aufnahmeelement in Umfangsrichtung vollständig umschließen. Auch hier ist denkbar, dass das Statorgehäuse das jeweilige Aufnahmeelement lediglich teilweise umschließt, zum Beispiel zu zwei Dritteln oder zur Hälfte.

Die Vergussmasse ist ein Bestandteil der Passung, so dass das Statorpaket über eine gezielte Ausgestaltung der Vergussmasse genau ausgerichtet werden kann. Bevorzugt sind die Aufnahmeelemente mit einem radialen Ringspalt gegenüber der Außenumfangsfläche angeordnet sind, wobei der Ringspalt zumindest teilweise von der Vergussmasse ausgefüllt ist. Der radiale Ringspalt kann geometrisch minimiert werden, wodurch die asymmetrische akustische Anregung minimiert wird. Die Vergussmasse wirkt als eine Art Stoßdämpfer zwischen Blechpaket und Statorgehäuse. Es entfällt eine mechanische Bearbeitung der Aufnahmeelemente. Das Paket kann ohne Gehäuseerwärmung eingesetzt und zentriert werden.

Die Aufnahmeelemente sind dabei in axialer Richtung versetzt zueinander angeordnet. Bevorzugt ist an den axialen Enden der Blechpakete jeweils eines der zumindest zwei Aufnahmeelemente angeordnet. Außerdem ist bevorzugt, dass der Ringspalt zu jeder axialen Seite durch eine zwischen dem Aufnahmeelement und der Außenumfangsfläche der Blechpakete einsitzendes Dichtelement begrenzt wird. Die Dichtelemente, welche bevorzugt als Dichtschnüre ausgeführt sind, haben insbesondere den fertigungstechnischen Zweck, während der Applikation der noch flüssigen Vergussmasse ein seitliches Weglaufen der Vergussmasse zu verhindern. Für die Vergussmasse kann insbesondere vorgesehen sein, dass es sich bei dieser um ein Metallpolymer handelt.

Außerdem kann in einer bevorzugten Ausgestaltung vorgesehen sein, dass mehrere axial verlaufende und über die Außenumfangsfläche der Blechpakete verteilt angeordnete Zugstäbe vorgesehen sind, wobei die Zugstäbe in radial nach innen sich öffnenden Ausnehmungen der Aufnahmeelemente angeordnet sind.

Zudem wird die Aufgabe gelöst durch eine elektrische Maschine, umfassend einen Stator und Rotorläufer, wobei der Stator einen Statorkern wie beschrieben aufweist.

Ferner wird die Aufgabe gelöst durch einen Antriebsstrang für eine Windkraftanlage zur drehmomentübertragenden Verbindung eines Rotors mit einem Generator, umfassend eine Hauptlagereinheit, eine Hauptwelle und ein über die Hauptwelle angetriebenes Getriebe, wobei das Getriebe den Generator zumindest mittelbar antreibt, dadurch gekennzeichnet, dass das Getriebe als elektrische Maschine wie beschrieben ausgebildet ist.

Die Aufgabe wird auch gelöst durch eine Windkraftanlage, umfassend einen Rotorflansch mit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: schematisch eine elektrische Maschine,
Fig. 2a) und 2b): einen Statorkern als Einzelheit und als Detaillierung,
Fig. 3: eine weitere Detaillierung des Statorkerns nach Fig. 2a), 2b) und
Fig. 4: eine perspektivische Darstellung einer Windkraftanlage.

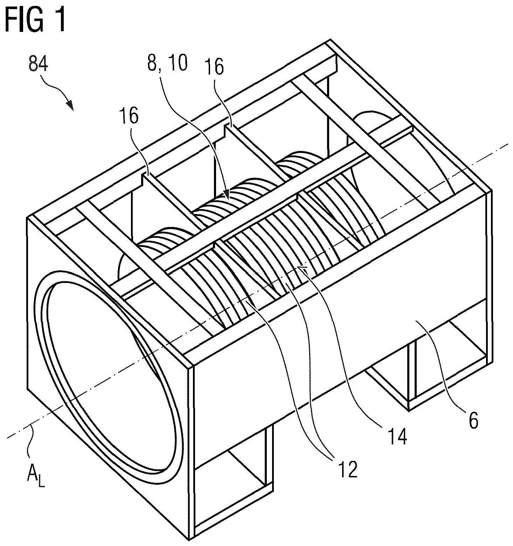

Die Figur 1 zeigt eine elektrische Maschine 84, beispielsweise in Form eines Generators, die einen hohlzylinderförmigen Stator 8 aufweist, in welchem ein nicht dargestellter Rotorläufer drehbar gelagert ist. Stator 8 und Rotorläufer sind konzentrisch zu einer Längsachse A_{L} angeordnet. Der Stator 6 umfasst einen aus einer Mehrzahl an Blechpaketen 12 zusammengesetzten Statorkern 10, der eine zylindrische Außenumfangsfläche 14 ausbildet. Weiterhin weist die elektrische Maschine 84 zwei Aufnahmeelemente 16 auf, die den Statorkern 10 jeweils umfänglich vollständig umschließen. Die beiden Aufnahmeelemente 16 sind dabei in Richtung der Längsachse A_{L} versetzt zueinander angeordnet. Die genannte Verbindung wird herkömmlich durch eine Verschweißung des Statorkerns 10 bzw. der Blechpakete 12 mit dem jeweiligen Aufnahmeelement 16 erreicht. Die elektrische Maschine 84 weist ferner ein Statorgehäuse 4 auf, welches den Stator 8 zumindest weitestgehend umschließt.

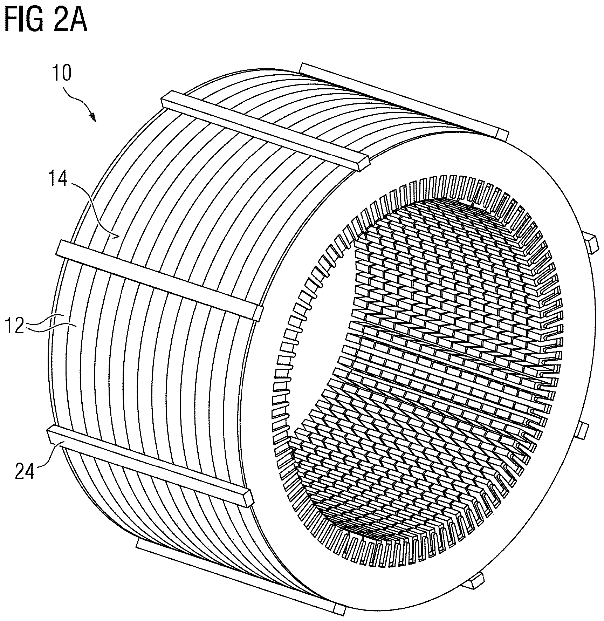

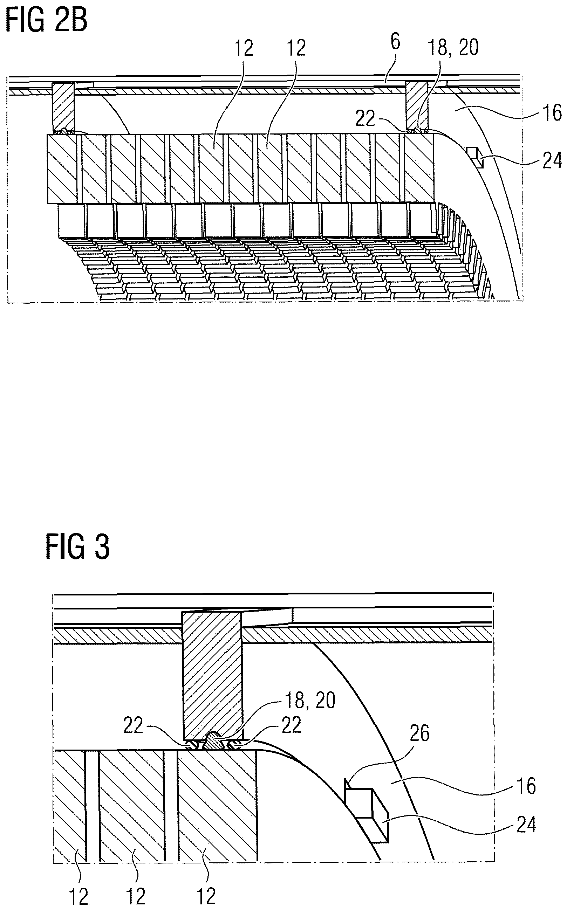

Die Figur 2a) zeigt einen Statorkern 10 als Einzelheit ohne dargestellte Aufnahmeelemente 16 und die Figur 2b) zeigt eine Detaillierung des Statorkerns 10 mit Aufnahmeelementen 16. Die zwei Aufnahmeelemente 16 sind über eine Vergussmasse 20 gegenüber der Außenumfangsfläche 14 befestigt. Die Aufnahmeelemente 16 sind jeweils an den axialen Enden der Blechpakete 12 angeordnet. Hierbei ist vorliegend vorgesehen, dass die zwei Aufnahmeelemente 16 die Au-ßenumfangsfläche 14 der beiden axial äußersten Blechpakete 12 jeweils vollständig umgeben.

Die Aufnahmeelemente 16 sind mit einem radialen Ringspalt 18 gegenüber der Außenumfangsfläche 14 angeordnet. Der Ringspalt 18 ist von der Vergussmasse 20 ausgefüllt. Bei der Vergussmasse 20 kann es sich um ein Metallpolymer handeln. Der Ringspalt 18 wird zu jeder axialen Seite jeweils durch ein zwischen dem Aufnahmeelement 16 und der Außenumfangsfläche 14 der Blechpakete 12 einsitzendes Dichtelement 22 begrenzt. Es sind mehrere axial verlaufende und über die Außenumfangsfläche 14 der Blechpakete 12 verteilt angeordnete Zugstäbe 24 vorgesehen, wobei die Zugstäbe 24 in radial nach innen sich öffnenden Ausnehmungen 26 der Aufnahmeelemente 16 angeordnet sind.

Die Figur 3 zeigt eine weitere, ausschnittsweise Detaillierung des Statorkerns 10 in dem Bereich, in dem ein Aufnahmeelement 16 über die Vergussmasse 20 gegenüber der Außenumfangsfläche 14 des Blechpakets 12 gehalten ist.

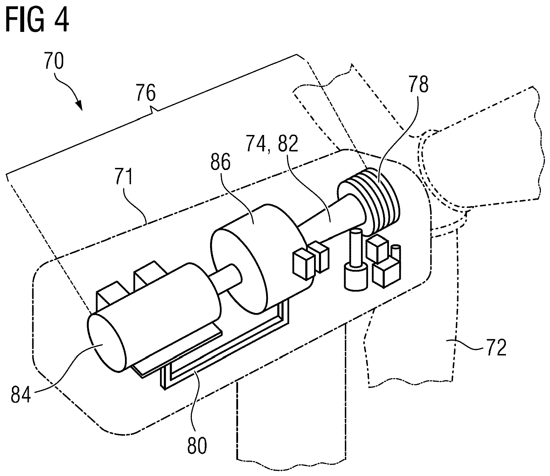

In der Figur 4 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 10 weist zumindest eine Planetenstufe 14 auf und ist wiederum über eine Hauptlagereinheit 82 mit einem Generator 84 gekoppelt. In der Hauptlagereinheit 82 ist eine Hauptwelle 74 vorgesehen ist

### Bezugszeichenliste

- 6: Statorgehäuse
- 8: Stator
- 10: Statorkern
- 12: Blechpakete
- 14: Außenumfangsfläche
- 16: Aufnahmeelement
- 18: Ringspalt
- 20: Vergussmasse
- 22: Dichtelement
- 24: Zugstab
- 26: Ausnehmung
- 70: Windkraftanlage
- 71: Gondel
- 72: Rotor
- 74: Hauptwelle
- 76: Antriebsstrang
- 78: Rotorflansch
- 80: Maschinenträger
- 82: Hauptlagereinheit
- 84: Generator
- 86: Getriebe

## Patentansprüche

1. Statorkern (10) für eine elektrische Maschine (84), insbesondere für einen Generator einer Windkraftanlage (70), umfassend
eine Mehrzahl an Blechpaketen (12), die in ihrer Gesamtheit hohlzylindrisch um eine Längsachse (A_{L}) angeordnet sind und eine zylindrische Außenumfangsfläche (14) bilden,
zumindest zwei Aufnahmeelemente (16),
wobei die zumindest zwei Aufnahmeelemente (16) über eine Vergussmasse (20) gegenüber der Außenumfangsfläche (14) befestigt sind.

2. Statorkern (10) nach Anspruch 1, **dadurch gekennzeichnet, dass** die zumindest zwei Aufnahmeelemente (16) die Außenumfangsfläche (14) der Blechpakete (12) im Wesentlichen vollständig, insbesondere vollständig, umgeben.

3. Statorkern (10) nach Anspruch 1 oder 2, **dadurch gekennzeichnet, dass** an den axialen Enden der Blechpakete (12) jeweils eines der zumindest zwei Aufnahmeelemente (16) angeordnet ist.

4. Statorkern (10) nach einem der Ansprüche 1 bis 3, **dadurch gekennzeichnet, dass** die Aufnahmeelemente (16) mit einem radialen Ringspalt (18) gegenüber der Außenumfangsfläche (14) angeordnet sind, wobei der Ringspalt (18) zumindest teilweise von der Vergussmasse (20) ausgefüllt ist.

5. Statorkern (10) nach Anspruch 4, **dadurch gekennzeichnet, dass** der Ringspalt (18) zu jeder axialen Seite durch eine zwischen dem Aufnahmeelement (16) und der Außenumfangsfläche (14) der Blechpakete (12) einsitzendes Dichtelement (22) begrenzt wird.

6. Statorkern (10) nach einem der Ansprüche 1 bis 5, **dadurch gekennzeichnet, dass** es sich bei der Vergussmasse (20) um ein Metallpolymer handelt.

7. Statorkern (10) nach einem der Ansprüche 1 bis 6, **dadurch gekennzeichnet, dass** mehrere axial verlaufende und über die Außenumfangsfläche (14) der Blechpakete (12) verteilt angeordnete Zugstäbe (24) vorgesehen sind, wobei die Zugstäbe (24) in radial nach innen sich öffnenden Ausnehmungen (26) der Aufnahmeelemente (16) angeordnet sind.

8. Elektrische Maschine (84), umfassend einen Stator (8) und Rotorläufer, **dadurch gekennzeichnet, dass** der Stator (8) einen Statorkern (10) nach einem der vorangegangenen Ansprüche aufweist.

9. Antriebsstrang (76) für eine Windkraftanlage (70) zur drehmomentübertragenden Verbindung eines Rotors (72) mit einem Generator (84), umfassend eine Hauptlagereinheit (82), eine Hauptwelle (74) und ein über die Hauptwelle (74) angetriebenes Getriebe (86), wobei das Getriebe (86) den Generator (84) zumindest mittelbar antreibt, **dadurch gekennzeichnet, dass** der Generator (84) als elektrische Maschine nach Anspruch 8 ausgebildet ist.

10. Windkraftanlage (70), umfassend einen Rotorflansch (78) mit einem Rotor (72) und einen Generator (84), wobei ein an einem Maschinenträger (80) gehaltener und den Rotorflansch (78) mit dem Generator (84) verbindender Antriebsstrang (76) vorgesehen ist, **dadurch gekennzeichnet, dass** der Antriebsstrang (102) nach Anspruch 9 ausgebildet ist.
